(19) Europäisches Patentamt
European Patent Office
Office européen des brevets

(11) **EP 2 854 453 A1**

(12) **EUROPEAN PATENT APPLICATION**

(43) Date of publication:
**01.04.2015 Bulletin 2015/14**

(51) Int Cl.:
***H04W 36/24*** *(2009.01)*

(21) Application number: **13186562.8**

(22) Date of filing: **29.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **SITILabs - I&D em Sistemas e Tecnologias Informáticas**
**1749-024 Lisboa (PT)**

(72) Inventor: **Esteves Carvalho Sofia, Rute**
**1990-002 Lisboa (PT)**

(74) Representative: **Betten & Resch**
**Theatinerstrasse 8**
**80333 München (DE)**

(54) **Method and apparatus for ranking visited networks**

(57)    A method for dynamically ranking visited networks which have been visited by a user equipment, wherein said method comprises to repeatedly perform the following steps:

a) based on an identifier of the visited network which is received by the user equipment when connecting to a visited network, storing for each visited network one or more network parameters which are collected by the user equipment when visiting a visited network, wherein the network parameters comprise at least one of the following:

i) a counter v counting the number of visits to said visited network,

ii) the duration d of a visit to said visited network;

b) calculating a ranking parameter for each visited network based on the corresponding network parameters which are collected for each of said visited networks; and

c) maintaining and updating a list of visited networks in which said visited networks are ranked based on their corresponding ranking parameters which have been calculated based on said network parameters to thereby rank said visited networks based on the roaming behavior of said user equipment.

Fig. 3

EP 2 854 453 A1

**Description**

**FIELD OF THE INVENTION**

The present invention relates to a method and an apparatus for ranking visited networks.

**BACKGROUND OF THE INVENTION**

The Internet backbone is extended by means of low-cost wireless technologies that embody a multi-operator model, i.e., a local-loop based upon what a specific community of people or entities (end-users) is willing to share networking resources. This represents a paradigm shift in the Internet evolution, as the end-user may be in control of parts of the network, in a way that is acknowledged (or not) by Internet stakeholders. In such scenarios - user-centric networking - strangers are expected to interact passively or actively for the sake of robust data transmission, several wireless access points and additional user equipment is controlled by the end-user, in addition to the regular model of control by operators. From a mobility management perspective, this implies that Mobility *Anchor Points (MAPs)* will often be co-located to wireless *Access Points (AP).*

The term Mobility Anchor Point used in the following description refers to a functional entity that takes care of all of the processes required to sustain movement of nodes that cross different networks, with reliability. For instance, in MIP the MAP is the entity known as Home Agent. In SIP, it corresponds to the SIP server and proxy entities. In 3G, it corresponds to the GGSN.

As several of these devices are controlled and/or owned by the end-user, the availability of MAPs cannot be easily controlled from a centralized perspective, as these elements they may disappear and appear in a dynamic and self-organizing way, thus disrupting the operation of mobility management solutions available in the network.

In order to deal with the problem of mobility there have been approaches which try to investigate roaming habits for selecting a network to connect with. EP1903828 explores a technique for preferred network selection based on the notion of roaming units. It relies on feedback provided in the form of call admission control of requests concerning roaming requests (e.g. rejected requests) to assist in influencing home and roaming network selection.

WO2012/080305 describes a method for controlling connections between multiple user devices and a network entity via a communication network, where a controlling entity gets information from a social system to retrieve data from users, in order to police the network.

All these approaches are based on some overhead to collect the roaming data. It is therefore desirable to have an approach for mobility management which reduces the need for signaling overhead.

**SUMMARY OF THE INVENTION**

According to one embodiment there is provided a method for dynamically ranking visited networks which have been visited by a user equipment, wherein said method comprises to repeatedly perform the following steps:

> a) based on an identifier of the visited network which is received by the user equipment when connecting to a visited network, storing for each visited network one or more network parameters which are collected by the user equipment when visiting a visited network, wherein the network parameters comprise at least one of the following:
>
>> i) a counter v counting the number of visits to said visited network,
>> ii)the duration d of a visit to said visited network;
>
> b) calculating a ranking parameter for each visited network based on the corresponding network parameters which are collected for each of said visited networks; and
> c) maintaining and updating a list of visited networks in which said visited networks are ranked based on their corresponding ranking parameters which have been calculated based on said network parameters to thereby rank said visited networks based on the roaming behavior of said user equipment.

Using the identifiers of visited networks together with the collection of network parameters for ranking visited networks enables the estimation of user roaming behavior in an easy way with no signaling overhead based on existing technologies which requires only small modifications on existing systems.

According to one embodiment said identifier of the visited network is a signal or a message which is automatically sent to said user equipment according to an existing network protocol, preferably a MAC layer protocol or an IP layer protocol, when said user equipment visits said network, said identifier comprising one or more of the following:

a MAC layer control message, preferably a beacon;
an IP layer signaling message, preferably an ICMP message;
the MAC of an access point;
a SSID,
an SSID.

These are suitable implementations of network identifiers which can be used without the need for any change to existing protocols or additional signaling.

According to one embodiment a ranking parameter of a visited network is calculated such that one or more of the following conditions are fulfilled:

The ranking parameter increases as the number of visits v of said visited network increases;
the ranking parameter increases as duration d of a visit to said visited network increases.

These are suitable implementations of network parameters used for calculating ranks.

According to one embodiment said counter v for a specific network counts the number of visits over a specific period of time; and/or
the duration d of a visit of a specific network is the average duration of a visit at the specific visited network.

These are suitable implementations of the duration and the number of visits as network parameters.

According to one embodiment said network parameters additionally comprise one or more of the following:

A parameter a expressing the visited network's attractiveness;
the average node's speed s;
the number of times rej the user equipment has been refused at a specific node;
the number of times ac the user equipment has been accepted at a specific node;
the time gap since the last visit to a specific visited network.

These are suitable examples of further network parameters.
According to one embodiment a rank of a visited network is calculated such that one or more of the following conditions are fulfilled:

the ranking parameter increases as the attractiveness a of a visited network increases;
the ranking parameter increases as the number of acceptances ac at a visited network increases;
the ranking parameter decreases as the number of rejections rej at a visited network increases.

These are suitable examples of implementations of the calculation of a ranking parameter.

According to one embodiment the method further comprises: Based on the repeatedly calculated ranked list of visited networks, obtaining an estimate for a potential move of said user equipment to another visited network, wherein said estimate for a potential move comprises an estimate of the next visited network to which said user equipment will move, and/or an estimate of the time at which said user equipment is likely to move to another network.

The estimate of a potential move can assist a network entity in making a handover decision.

According to one embodiment said estimate for a next visited network is based on the network having the highest rank, said method further comprising:

Forwarding said estimate to a network entity which is responsible for managing a handover.

This enables the entity which is responsible for the handover to consider the highest ranked visited network for a handover.

According to one embodiment said estimate of the time at which said user equipment is likely to move is based on the average duration at the network which said user equipment is currently visiting.
This is a suitable implementation of a time estimate.

According to one embodiment the method further comprises: When the time which the user equipment is attached to the current visited network reaches the average duration of a visit of the currently visited network minus a threshold, sending a notification indicating the likely next visited network to an entity in the network which manages a handover.

This is a further suitable implementation of a time estimate.

According to one embodiment the notification which is sent contains an indication of the best next visited network according to the ranking and also about how much time in average is left for a move to the next visited network based on the average duration at the presently visited network.

This enables the entity which is responsible for the handover to consider a suitable time and a suitable next network based on the estimate.

According to one embodiment there is provided an apparatus for dynamically ranking visited networks which have been visited by a user equipment, wherein said apparatus comprises a module to repeatedly perform the following steps:

a) based on an identifier of the visited network which is received by the user equipment when connecting to a visited network, storing for each visited network one or more network parameters which are collected by the user equipment when visiting a visited network, wherein the network parameters comprise at least one of the following:

i) a counter v counting the number of visits to said visited network,
ii) the duration d of a visit to said visited network;

b) calculating a ranking parameter for each visited network based on the corresponding network parameters which are collected for each of said visited networks; and
c) maintaining and updating a list of visited networks in which said visited networks are ranked based on their corresponding ranking parameters which have been calculated based on said network parameters to thereby rank said visited networks based on the roaming behavior of said user equipment.

This is a suitable implementation of an apparatus according to an embodiment of the invention.

The apparatus may further comprise one or more modules for performing a method according to an embodiment of the invention.

According to one embodiment there is provided computer program comprising computer program code which when being executed on a computer enables said computer to perform a method according to one of the embodiments of the invention.

## DESCRIPTION OF THE DRAWINGS

Figure 1 schematically illustrates a metropolitan area network.
Fig. 2 schematically illustrates a UCN.
Fig. 3 schematically illustrates a scenario according to an embodiment of the invention.

## DETAILED DESCRIPTION

Before describing embodiments of the invention, at first some terms and acronyms used in the following description are defined and explained.

- **Mobility anchorpoint location:** This corresponds to the mechanism applied to support all the processes that assist in identifying the MN at any instant in time, as well as processes that support communication to and from the MN.

- **Mobility estimation**: it is the procedure that may assist a MN or the network in selecting a next point of attachment while the connection to the current point of attachment is still active.

- **Visited Network.** A network that a UE attaches to at some instant in time. The visited network may or may not hold several entities, e.g. AP, AP and MAP, AP and one or more AR. It should be noted that a visited network is not necessarily wireless. For instance, it could be based on LTE - what in the following examples ins named an AP could then be a femtocell. Or, it could be fixed and the AP could then be an access router.

- **Mobility Anchor Point.** A functional entity that takes care of all of the processes required to sustain movement of nodes that cross different networks, with reliability. For instance, in MIP the MAP is the entity known as Home Agent. In SIP, it corresponds to the SIP server and proxy entities. In 3G, it corresponds to the GGSN device.

| Acronym | Meaning |
|---------|---------|
| UCN | User-provided Networks |
| UMM | User-centric Mobility Management |
| Wi-Fi | Wireless Fidelity |
| MIP | Mobile IP |
| MIPv6 | Mobile IPv6 |
| CN | Corresponding Node |
| HA | Home Agent |
| MN | Mobile Node |
| AN | Access Node |
| EN | Edge Node |
| CP | Customer Premises |
| CPE | Customer Premises Equipment |
| AP | Access Point |
| RG | Residential Gateway |
| AR | Access Router |
| NAP | Network Access Provider |
| SP | Service Provider |
| ISP | Internet Service Provider |
| ASP | Application Service Provider |
| NSP | Network Service Provider |
| UE | User Equipment |
| UCN | User-provided Network |
| vo | Virtual Operator |
| MP | Micro-provider |

According to one embodiment there is provided a method developed to a device which assists in automatically obtaining information available about visited networking locations, and to rank those visited locations in a way according to a user's passive or active preferences. For that purpose, according to one embodiment there is collected data which is automatically and without any additional overhead provided as signalling data in the network, such as e.g. beacons. Based thereon there is then derived information about the roaming habits of the user, i.e. the time the user spends connected to a specific network. Based on the collected data there is then calculated a ranking of the visited networks.

In this manner there is provided a way to rank preferred network selection in a passive way, without any additional signaling overhead, but instead based on information that visited networks already send around automatically to nodes involved in visits.

According to one embodiment there is provided a method for dynamically ranking visited networks which have been visited by a user equipment, wherein the method repeatedly performs the following steps:

d) based on an identifier of the visited network which is received by the user equipment when connecting to a visited network, storing for each visited network one or more network parameters which are collected by the user equipment when visiting a visited network, wherein the network parameters comprise at least one of the following:

iii) a counter v counting the number of visits to said visited network,
iv) the duration d of a visit to said visited network;

e) calculating a ranking parameter for each visited network based on the corresponding network parameters which

5

are collected for each of said visited networks; and

f) maintaining and updating a list of visited networks in which said visited networks are ranked based on their corresponding ranking parameters which have been calculated based on said network parameters to thereby rank said visited networks based on the roaming behavior of said user equipment.

This means that there is made use of an identifier which identifies a visited network and which is "automatically" obtained by the user equipment during the existing procedure or protocol which is carried out when attaching to a visited network. Such identifiers may be beacons in a WiFi network, an BSSID, an SSID, or any other signal or message which identifies the visited network. In any case, existing protocols or technologies do not need to be modified to obtain this identifier of the visited network.

The user equipment then collects for each specific visited network at least one network parameter, for example the number of connections to the specific network, preferable the number over a specific time, and/or the duration of the visit, preferably the "average duration" of a visit to the specific network.

These network parameters can then be used to calculate a ranking parameter for each visited network which then may be used to maintain a list of visited networks in which the visited networks are ranked according to their ranking parameters. The resulting list thereby reflects the "preferences" and the roaming behavior of the user equipment with respect to visited networks.

Such a ranking of visited networks then according to one embodiment can be used to perform an a priori MAP selection based on the user's roaming habits (user's mobility patterns), e.g., his/her preference in terms of visited networks. Such information concerning visited networks attractiveness (i.e. the "ranking" of visited networks) from a user perspective can then be passed to the network or to any entity of the network which manages mobility to assist in a better selection of mobility anchor points. For example, a decision whether a handover should be made and/or when a handover should be made may be based on the ranking of the visited networks. The handover decision making entity may use such data as an additional input for its decision.

Therefore according to one embodiment based on the repeatedly calculated ranked list of visited networks there is obtained an estimate for a potential move of said user equipment to another visited network, wherein said estimate for a potential move comprises e.g. an estimate of the next visited network to which said user equipment will move, and/or an estimate of the time at which said user equipment is likely to move to another network. Such information may then be forwarded to an entity which manages a handover, and this entity may then use such information when making a handover decision.

The use of signals which are in any case sent, independent of the task of tracking the movement of mobile devices, and to use such signals for estimating roaming habits of users in an anonymous way (without keeping any information about the user himself) to obtain a ranking of visited networks can provide a relevant tool in user-centric environments. By tracking aspects of a user's owned device roaming behavior such as e.g. preferred networks or number of visits performed during a specific period, according to one embodiment it becomes possible to more adequately foresee which next MAP a specific device should associate with.

In contrast, with today's mobility management solutions, the end-user device shall associate to any available mobility anchor point.

In the following there will be described further embodiments of methods to dynamically I) rank visited networks, based on a set of networking parameters that are solely collected by a UE while visiting a network, without any human interaction nor by recurring to external information sources that may provide specific data about the user; and ii) to provide an estimate for a handover (MAP selection).

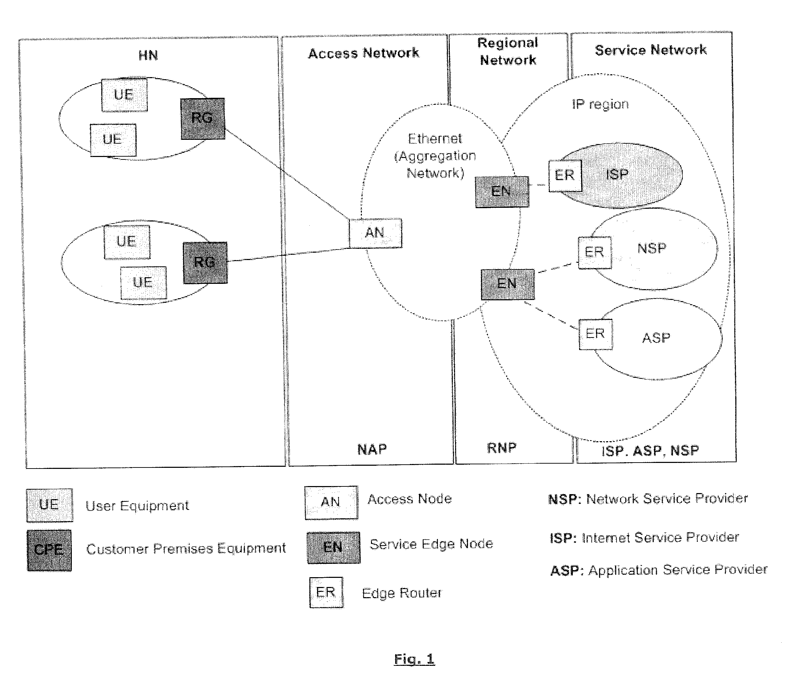

Before describing such further embodiments, in order to address the different use-cases which shall assist in describing the applications of embodiments, at first there will be provided a description of a generic *Metropolitan Area Network (MAN)* model, as illustrated in Fig. 1. The MAN has been split into several logical regions, which group different types of functionality.

The several regions shown in Fig. 1 provide an end-to-end scheme assuming that the MAN is multi-access. Starting from the perspective of the end-user, the ***Customer Premises (CP)*** relate to residential households and enterprise market and are, as of today, controlled by the end-user. The UE corresponds to a generic user terminal, e.g., PC, Smartphone, Set-Top Box (STB). The RG stands for a *Residential Gateway* which incorporates router functionality and a modem (e.g., DSL modem) with a built-in Network Terminator (NT). For the specific case of IPv4, the RG incorporates *Network Address Translation (NAT)* functionality together with specific *Application Layer Gateway (ALG)* functionality, e.g., a SIP-ALG. The RG is responsible for providing IP connectivity to the several UE elements, along with IP routing, QoS, etc. In the embodiments described in the following, the RG corresponds to an *Access Point (AP)* co-located with an *Access Router (AR)*.

The next region is the **Access Network.** The access network region comprises in fact several networks that provide the connectivity and traffic aggregation between the customer and the SPs to whom the end-customer holds subscription agreements. Access networks are owned by one or more NAPs, which may be ILECs or CLECs. The access network can be further split into first mile (local-loop) and *aggregation network.* The former comprises both the physical connection and optional equipment between NT and the so-called *access node (AN).* The latter comprises the region where first mile traffic is further aggregated, to be delivered to the regional network. The AN represents a point (in most cases, the first) where several circuits coming from different customers are aggregated. The AN performs the required L2 functions e.g., port isolation, VLAN support, and may optionally incorporate L3 functionality, e.g., in the form of basic IP routing filtering and/or IP session awareness.

Normally coupled with the access region is the **Regional Network.** This region interconnects the access network to regional broadband networks. This network is in fact optional, being most of the time access and regional regions addressed as a whole. When present, the regional network is operated by one or several *Regional Network Providers (RNPs).* The regional network (or access, in case the regional network is not present) is terminated by the so-called *Edge Nodes (EN)* of which a *Broadband Remote Access Server (BRAS)* is a particular example. Edge nodes therefore represent mediation points between the access/regional network and the service network, and both single-edged and multiple-edged networks are considered in this report.

Services today provided in the Internet are located in the **Service Network.** The service network covers the MAN region where SPs are and encompasses networks operated by one or several ISPs, NSPs, and ASPs. This region is therefore in its majority IP-based and connects two different types of providers to one or several RNP/NAPs. The *Edge Router (ER)* is the ingress/egress to/from the NSP/ISP/ASP.

Mobility management aspects in this report are to be addressed from an end-to-end perspective, but having into particular consideration spontaneous wireless environments, which today correspond to the majority of technical scenarios on the last hop towards the end-user. This implies that when considering movement of people and of devices, one must take into consideration aspects that relate to spontaneous wireless environments.

## EMERGING WIRELESS ARCHITECTURE SCENARIOS, USER-CENTRIC NETWORKS

*User-centric networks (UCNs)* relate to a recent trend in spontaneous wireless deployments where individual users or communities share subscribed access in exchange of specific incentives. In addition to the sharing of subscribed access, the Internet user role is augmented in UCNs given that i) the user becomes a producer/provider of specific services; ii) the user device is part of the network. It should be noticed that this is an aspect that goes against the Internet end-to-end principle, which describes a clear functional splitting between end-systems and the network. Hence, this specific type of use-case introduces new aspects which are worth to be analyzed from a mobility management perspective, given that they may bring in new opportunities. Other names in related literature are *personal hotspot, spontaneous user-centric* networks.

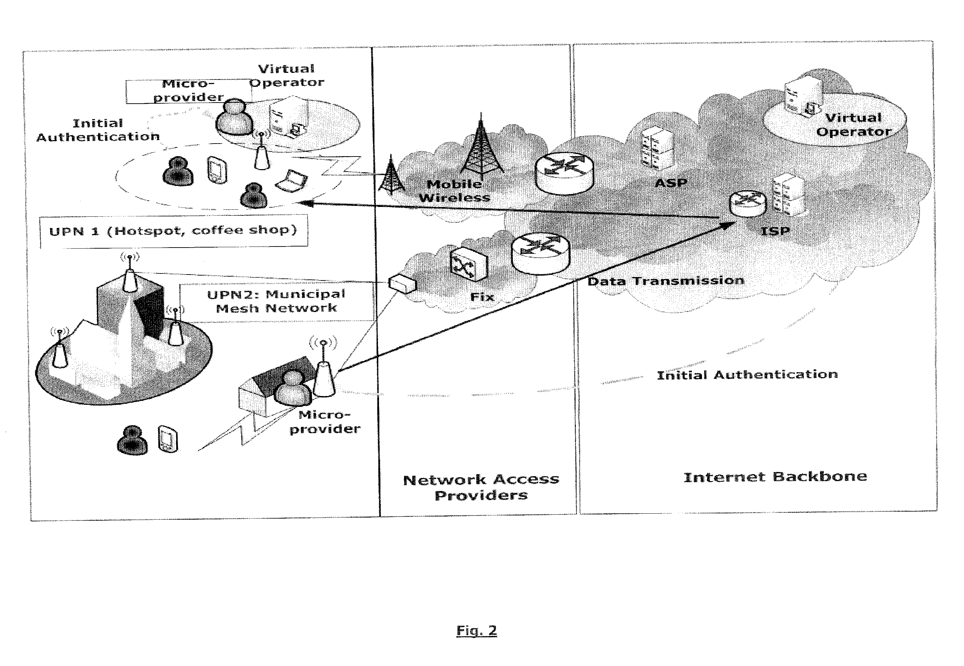

Fig. 2 illustrates a generic scheme of a UCN, where two sets of users shared subscribed access with passers-by.

A previous analysis of deployed examples of UCNs describes two main types of UCNs: *infrastructure-based,* and *mesh-based.* Both types are simply being applied as complement to existing access networks: they allow expansion of such infrastructures across one wireless hop. For both models, there is normally one individual or entity (the *Micro-Provider, MP)* which is responsible for sharing his/her connection with N-1 other users (out of a universe of N users, who today belong to a single community). Moreover, a user is, in a specific community, simply identified by a virtual identifier (normally, a set of credentials username and password) which is stored by a *Virtual Operator (VO)* and relied upon whenever the user decides to access the Internet by means of a specific community hotspot. It should be noticed that authentication is just the initial step.

For better explaining the concept of UCN reference is made to Fig. 2 where an end-to-end perspective of Internet access is illustrated. Within the customer premises there are two different scenarios: UPN 1 represents a hotspot scenario where a coffee shop owner is willingly sharing his Internet access with specific friends in the coffee shop. An initial local authentication procedure (control plane) is therefore set to ensure that only friends of the MP can get Internet access. Data is then transmitted by relying on the routing rules stipulated by the Internet subscription of the MP. In this case, the MP is also the VO.

Scenario UPN2 corresponds to the regular municipality Wireless Fidelity (Wi-Fi) case. As example we consider a small village covered by a mesh network, being the user authentication local. In other words, the municipality is the MP and the VO. The third case (UPN 3) corresponds to a residential scenario, where a regular user at home decides to open access to a specific community which is managed by a VO. The only relation the MP has to the VO is of belonging to the community coordinated by the VO.

## Mobility Management Characterization

UCNs are based on the notion of users carrying (or owning) low-cost and limited capacity portable devices which are cooperative in nature and which extend the network in a user-centric way, not necessarily implying the support for networking services such as multihop routing. For instance, in UCNs transmission may simply be relayed based on simple mechanisms already existing in end-user devices.

These emerging architectures therefore represent networks where the nodes that integrate the network are in fact end-user devices which may have additional storage capability and which may or may not sustain networking services. Such nodes, being carried by end-users exhibit a highly dynamic behavior. Nodes move frequently following social patterns and based on their carriers interests; inter-contact exchange is the basis for the definition of connectivity models as well as data transmission. The network is also expected to frequently change (and even to experience frequent partitions) due to the fact that such nodes, being portable, are limited in terms of energy resources.

From a mobility perspective UCNs therefore exhibit a highly dynamic behavior where the selection of the "best" mobility anchor points requires the pursuit of two main aspects: adequate selection and redundancy. This has to be achieved by always weighting user expectations and the support each user is willing to give as well as the network support (access sharing) each user can in fact provide to its counterpeers in the network.

Mobility anchor point location and selection optimization is therefore a crucial requirement of UCNs. Mobility anchor points may be part of the SP equipment, of the NAP equipment (edge node) or in fact be part of the equipment of the MP and this can increase heavily a UCN complexity.

Table 1 illustrates Mobility management assumptions and requirements for UCNs:.

| Assumptions | MP is a key target in terms of network management (and hence of mobility management) |
| | VO is simply a coordinator of authentication |
| | Users (and carried devices) roam frequently - devices carried or owned by humans |
| | Node movement follows human movement patterns |
| Requirements | Mobility anchor point redundancy |
| | Optimal mobility anchor point selection |
| | Flexible mobility management architecture (most likely, decentralized) |

According to some embodiments there is provided an approach to estimate future roaming behavior of UEs, based on history of roaming behavior that is passively collected over time. That data then can be used to assist the device in triggering (or not) e.g. requests to handover.

**Operational Example - MAC Layer**

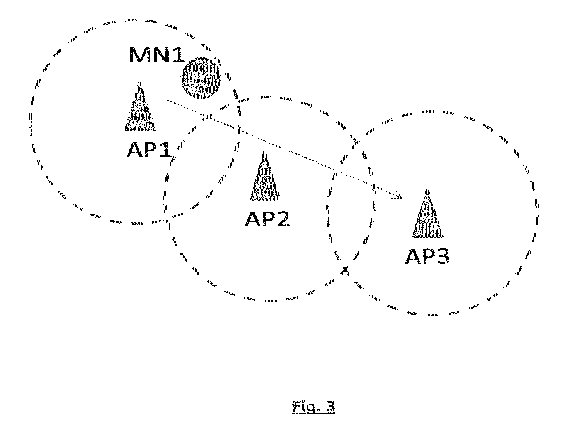

In the following a concrete operational example according to one embodiment will be described. One may consider a wireless UE MN1 and three MAPs which in this embodiment are co-located with three access points (AP1, AP2, AP3) as illustrated in Fig. 3. However, other options would be for each AP to communicate with a MAP on a server in the network - when a request arrives for a specific MAP, the AP simply redirects that request to its MAP. Hence, the correspondence in this embodiment is: AP1 is served by MAP1; AP2 is served by MAP2; AP3 is served by MAP3.

MN1 has a regular routine trajectory where, for a specific period of time, it passes by the three different APs holding MAP1, MAP2, MAP3.

MN1, as a regular wireless (e.g. 802.11g) enabled device, is set to perform passive scanning, i.e., while roaming it passively receives Beacon frames sent by the surrounding APs. MN1 then stores in a local database (e.g. text file, lightSQL) data concerning each of the visited APs over time. This list contains the identifier of APs where MN1 attaches to (e.g. BSSID, MAC, SSID), as well as APs that MN1 did not attach to. The identifier's of AP's thereby correspond to identifiers of the visited networks.

MN1 then in this embodiment regularly follows a path that crosses the range of the 3 mentioned APs and hence, it makes it a suitable candidate for any of the 3 available MAPs.

Within its regular roaming and over time (over different hours of a day; over a week, or month) MN1 updates its list of visited networks, where a visited network can be identified by parameters such as the MAC of an AP; IP of an access router; BSSID; SSID. For each visited network, MN1 then keeps track of a series of network parameters that allow it to seamlessly and periodically compute, in background, its "preference" towards a visited network by calculating a "ranking parameter" for each visited network. Concrete examples of network parameters are, but not limited to:

1. Number of visits performed over a specific period of time, e.g. 24h. The counter is increased if MN1 gets attached to a specific AP, hereby denoted as *v*.

2. Average duration of one visit. The average duration starts when MN1 attaches to a MAP, and stops when MN1 gets detached from that MAP, hereby denoted as d.

3. Visited network attractiveness. This can be a parameter that a user sets by hand (e.g. gives more preference to using AP1 than AP2) or it can be passively collected via e.g. distributed trust schemes that are present in the network (e.g. provided by the operator). This parameter is denoted as a.

4. Average node speed, this parameter is denoted as s.

5. Number of times MN1 has been refused on that visited network, denoted as *rej.*

6. Number of times MN1 has been accepted on that visited network, denoted as *ac.*

7. Time gap since the last visit to a specific visited network, represented as *timeelapsed.*

For each visited network, MN1 then computes (locally, seamlessly, and periodically) a cost (a ranking parameter) based on a specific formula that relies on the collected network parameters. That ranking parameter is also stored in the listing of visited networks of MN1. Specific formulas that could provide that ranking parameter and assuming subsets of network parameters are:

$$a)\ \text{ranking parameter} = v*d*a.$$

$$b)\ \text{ranking parameter} = v*d*a*1/rej*ac$$

Other formulas may apply as well.

In one specific example, one may assume that AP1 would have a ranking parameter of 0.5; AP2 would have a ranking parameter 0.2; AP3 would have a ranking parameter 4. As mentioned, MN1 periodically updates this information in the kept list, and thereby maintains a ranking of the visited networks according to the roaming behavior of the mobile node.

According to one embodiment the ranking may then be used to provide an estimate on a potential move.

The estimate in one embodiment is based both on the computed ranking parameter, as well as on the average duration of a visit. In one embodiment, one may assume that MN1 has recorded an average visit duration of 15 minutes to AP1. On the current visit, 6 minutes have elapsed. Periodically, MN1 analyses its list of visited networks and checks whether or not the average duration visit is being reached. From a computational perspective, this means that MN1 has a time threshold which in this example is considered to be 1 minute, to reach and eventually send a notification to an entity in the current visited network (e.g., AP, MAP, etc) which is responsible for a handover decision. So, in the present example, after 6 minutes, MN1 realizes that there is still a gap of 9 minutes and therefore does not send any information. When MN1 realizes that the current visit has reached 14 minutes, it sends a notification about the best possible visited network which, in the present example, is the visited network served by AP3 which has the highest ranking parameter. In that notification, it therefore sends information to AP1 about the best next AP - AP3, and also about how much time in average is left for a move.

MN1 according to one embodiment does not perform, however, any decision concerning moving (handover). It simply sends information about the potential move to the network or to an entity in the network which manages mobility, such as e.g. an MME in an LTE network, or to any other entity which is handling mobility and is responsible for a handover and which then decides whether or not to react and to trigger a handover.

In the foregoing several embodiments have been described which rank, from an individual or collective mobile node perspective, visited networks. Such ranking is based on networking parameters collected from visits to specific wireless networks

Such solution may comprise three components, all of which reside on the OSI application Layer:

- A module for passively gathering information about the visited network via the regular networking mechanisms, e.g. MAC Layer control messages (beacons) or IP Layer signaling (e.g. ICMP).
- A module for collecting, to a local or remote repository (in another device) a previously selected and configured set of network parameters;
- A module for periodically computing the ranking for each visited network (and according to one embodiment its corresponding MAP) in its local list (independently of being on its range at an instant in time).
- A module for periodically emitting an estimate for a next move, e.g. to an external mobility management solution component.

In the following there will be described a further embodiment related to Wireless Fidelity (Wi-Fi) networks. However, this embodiment can easily be extended or applied to other forms of packet-based networks as well.

Today any device in a WiFi network receives, as part of the regular process of association and authorization to wireless antennas (MAC Layer) MAC beacons. It then collects periodically a series of items to collect network parameters such as the ones already described in previous embodiments. The parameters are therefore computed in a seamless and local way, being only anonymous data considered. This data is kept locally and in one embodiment can also be transmitted to one or multiple remote repositories, e.g. a centralized SQL database on a server, which acquires data from multiple UEs.

The next step (which is also executed periodically based on the local information collected) is to compute a potential time estimate T for a move to occur to a previously visited network, or to a new network in the vicinity. This time estimate derives from the average visit time to the current network as well as of the duration of the current visit. For instance, assuming that a visit in average for network A lasts for 10 minutes, and that 2 minutes have elapsed, the UE computes a gap of 8 minutes for a move to occur.

An example of the operation according to one embodiment is as follows:

1. mechanism starts in background in MN1

    a) gets access to the networking card (e.g. wireless card)
    b) opens a specific repository, local, or the process to store data on a remote repository (e.g. text file or mysql)

2. MN1 performs a request to accessible networks by performing regular MAC operations

    a) scanning or simply receiving broadcasted beacons

3. b) MN1 has two possibilities to attach (APs in the range), namely, visited networks identified by AP1 and by AP2.
4. MN1 checks its repositories to find data about these networks.
5. If MN1 has information about any of them, it collects the ranking parameter.
If not, jumps to step 8
6. MN1 realizes the network identified by AP1 has ranking parameter of 5 while the network identified by AP2 has ranking parameter of 7. MN1 selects the network identified by AP2 to connect to.
7. MN1 requests the user to adjust its own preference to the network attached to (attractiveness parameter a). (variation MN1 gets that input dynamically from an implemented distributed trust scheme).
8. MN1 adds/updates entries to both networks in the available repository, adding network parameters collected.
9. MN1 starts the periodic operation of estimating potential moves (steps 10 onwards).
10. Ranking for the visited networks on the list is updated in MN1 visited networks repository every y seconds based on a specific formula for calculating the ranking parameter which is based on network parameters collected over time.
11. Every x seconds, MN1 verifies:

    a) the repository of visited networks, to check if there is a better ranked visited network (higher ranking).
    b) how much time has elapsed since the current visit duration.
    c) if the difference of time between the current visit elapsed time and the average visit duration to the current network is lower than a specific time threshold.

12. If 11c) applies, then MN1 emits a message holding the time left for a potential move as well as the selected target and respective ranking parameter, to notify:

    a) the local device, screen, or process in MN1 notifying the user about a potential handover.
    b) an entity on the network, e.g. a mobility anchor point or an AP.

As shown, this embodiment ends up by not making a decision on a move. It instead notifies an entity (a user, some entity on the network, or even some other process in the local device) that a potential move may occur, so that a decision may assist the device in reaching some form of reliability in terms of active communication flow.

The embodiments described in the foregoing achieve several advantages compared with prior art approaches, e.g.:

• The do not require any external source of information e.g. data collected from a specific repository, as all data is today available via regular MAC Layer communication, when a node is associated to a specific wireless network.
• They may assist in estimating user roaming behavior in a completely anonymous, passive, and transparent way.
• They do not introduce any signaling overhead to estimate a move.
• They may improves the behavior of today's mobility management solutions in a way that is decentralized - it does not require a local, centralized entity
- They are flexible and can be easily tailored to consider new parameters.
- They are applicable to any existing mobility solution.
- They may assist in reducing required signaling overhead with current mobility solutions.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a base station, an enhanced Node B, a wireless access point, or anything alike.

**Claims**

1. A method for dynamically ranking visited networks which have been visited by a user equipment, wherein said method comprises to repeatedly perform the following steps:

   a) based on an identifier of the visited network which is received by the user equipment when connecting to a visited network, storing for each visited network one or more network parameters which are collected by the user equipment when visiting a visited network, wherein the network parameters comprise at least one of the following:

   i) a counter v counting the number of visits to said visited network,
   iii) the duration d of a visit to said visited network;

   b) calculating a ranking parameter for each visited network based on the corresponding network parameters which are collected for each of said visited networks; and
   c) maintaining and updating a list of visited networks in which said visited networks are ranked based on their corresponding ranking parameters which have been calculated based on said network parameters to thereby rank said visited networks based on the roaming behavior of said user equipment.

2. The method of claim 1, wherein said identifier of the visited network is a signal or a message which is automatically sent to said user equipment according to an existing network protocol, preferably a MAC layer protocol or an IP layer protocol, when said user equipment visits said network, said identifier comprising one or more of the following:

   a MAC layer control message, preferably a beacon;
   an IP layer signaling message, preferably an ICMP message;
   the MAC of an access point;
   a BSSID,
   an SSID.

3. The method of one of the preceding claims, wherein a ranking parameter of a visited network is calculated such that one or more of the following conditions are fulfilled:

   the ranking parameter increases as the number of visits v of said visited network increases;
   the ranking parameter increases as duration d of a visit to said visited network increases.

4. The method of one of the preceding claims, wherein
   said counter v for a specific network counts the number of visits over a specific period of time; and/or
   the duration d of a visit of a specific network is the average duration of a visit at the specific visited network.

5. The method of one of the preceding claims, wherein said network parameters additionally comprise one or more of the following:

   a parameter a expressing the visited network's attractiveness;
   the average node's speed s;
   the number of times rej the user equipment has been refused at a specific node;

the number of times ac the user equipment has been accepted at a specific node;
the time gap since the last visit to a specific visited network.

6. The method of one of the preceding claims, wherein a rank of a visited network is calculated such that one or more of the following conditions are fulfilled:

The ranking parameter increases as the attractiveness a of a visited network increases;
the ranking parameter increases as the number of acceptances ac at a visited network increases;
the ranking parameter decreases as the number of rejections rej at a visited network increases.

7. The method of one of the preceding claims, further comprising:

based on the repeatedly calculated ranked list of visited networks, obtaining an estimate for a potential move of said user equipment to another visited network, wherein said estimate for a potential move comprises an estimate of the next visited network to which said user equipment will move, and/or an estimate of the time at which said user equipment is likely to move to another network.

8. The method of claim 7, wherein said estimate for a next visited network is based on the network having the highest rank, said method further comprising:

Forwarding said estimate to a network entity which is responsible for managing a handover.

9. The method of claim 7 or 8, wherein said estimate of the time at which said user equipment is likely to move is based on the average duration at the network which said user equipment is currently visiting.

10. The method of one of claims 7 to 9, further comprising:

When the time which the user equipment is attached to the current visited network reaches the average duration of a visit of the currently visited network minus a threshold, sending a notification indicating the likely next visited network to an entity in the network which manages a handover.

11. The method of one of claims 7 to 10, wherein the notification which is sent contains an indication of the best next visited network according to the ranking and also about how much time in average is left for a move to the next visited network based on the average duration at the presently visited network..

12. An apparatus for dynamically ranking visited networks which have been visited by a user equipment, wherein said apparatus comprises a module to repeatedly perform the following steps:

a) based on an identifier of the visited network which is received by the user equipment when connecting to a visited network, storing for each visited network one or more network parameters which are collected by the user equipment when visiting a visited network, wherein the network parameters comprise at least one of the following:

i) a counter v counting the number of visits to said visited network,
ii) the duration d of a visit to said visited network;

b) calculating a ranking parameter for each visited network based on the corresponding network parameters which are collected for each of said visited networks; and
c) maintaining and updating a list of visited networks in which said visited networks are ranked based on their corresponding ranking parameters which have been calculated based on said network parameters to thereby rank said visited networks based on the roaming behavior of said user equipment.

13. The apparatus of claim 12, further comprising:

A module for performing a method according to one of claims 2 to 11.

14. A computer program comprising computer program code which when being executed on a computer enables said computer to perform a method according to one of claims 1 to 11.

Fig. 1

**Fig. 2**

Fig. 3

**Europäisches Patentamt**
**European Patent Office**
**Office européen des brevets**

# EUROPEAN SEARCH REPORT

Application Number

EP 13 18 6562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/165583 A1 (PECEN MARK E [CA]) 19 July 2007 (2007-07-19) * the whole document * | 1-14 | INV. H04W36/24 |
| X | US 2013/150012 A1 (CHHABRA KAPIL [US] ET AL) 13 June 2013 (2013-06-13) * paragraphs [0027], [0041], [0042] * | 1-14 | |
| X | KR 2004 0105136 A (LG ELECTRONICS INC) 14 December 2004 (2004-12-14) * the whole document * | 1-14 | |
| X | US 2013/023281 A1 (MEREDITH SHELDON [US] ET AL) 24 January 2013 (2013-01-24) * the whole document * | 1-14 | |
| A,D | EP 1 903 828 A1 (STAR HOME GMBH [CH]) 26 March 2008 (2008-03-26) * the whole document * | 1-14 | |

TECHNICAL FIELDS SEARCHED (IPC)

H04W

The present search report has been drawn up for all claims

| Place of search | Date of completion of the search | Examiner |
|---|---|---|
| Munich | 18 February 2014 | Megalou-Nash, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 854 453 A1**

**ANNEX TO THE EUROPEAN SEARCH REPORT
ON EUROPEAN PATENT APPLICATION NO.**

EP 13 18 6562

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2014

| Patent document cited in search report | | Publication date | Patent family member(s) | | Publication date |
|---|---|---|---|---|---|
| US 2007165583 | A1 | 19-07-2007 | AT | 536717 T | 15-12-2011 |
| | | | CA | 2637374 A1 | 26-07-2007 |
| | | | CA | 2753368 A1 | 26-07-2007 |
| | | | EP | 1974574 A1 | 01-10-2008 |
| | | | EP | 2339879 A1 | 29-06-2011 |
| | | | EP | 2458917 A1 | 30-05-2012 |
| | | | US | 2007165583 A1 | 19-07-2007 |
| | | | US | 2009135798 A1 | 28-05-2009 |
| | | | WO | 2007082368 A1 | 26-07-2007 |
| US 2013150012 | A1 | 13-06-2013 | TW | 201330666 A | 16-07-2013 |
| | | | US | 2013150012 A1 | 13-06-2013 |
| | | | WO | 2013085610 A1 | 13-06-2013 |
| KR 20040105136 | A | 14-12-2004 | NONE | | |
| US 2013023281 | A1 | 24-01-2013 | NONE | | |
| EP 1903828 | A1 | 26-03-2008 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1903828 A

- WO 2012080305 A